# EUROPEAN PATENT SPECIFICATION

(11) **EP 0 302 622 B1**
(45) Date of publication and mention of the grant of the patent: **11.05.1994**
(21) Application number: 88306614.4
(22) Date of filing: 20.07.1988
(51) Int. Cl.: H04J 3/07, H04L 27/34

(54) **Method of communicating stuffing indications in a multi-level communications system**
Übertragungsverfahren von Stopfanzeigen in einem mehrstufigen Übertragungssystem
Méthode de transmission d'indications de bourrage dans un système de communication à niveaux multiples

(30) Priority: 06.08.1987 CA 543871
(43) Date of publication of application: 08.02.1989
(73) Proprietor: NORTHERN TELECOM LIMITED, Montreal Quebec H3B 4N7 (CA)
(72) Inventor: McNicol, John Duncan, Neapean Ontario, K2J 2Y4 (CA); Jemczyk, Iwan David, Neapean Ontario, K2J 2L1 (CA)
(74) Representative: Dennis, Mark Charles

(56) References cited:
- US-A- 4 855 692
- ELECTRONICS & COMMUNICATIONS IN JAPAN, vol. 60, no. 12, December 1977, pages 18-25; S. HIRAKAWA et al.: "Application of multilevel coding to amplitude-and-phase-shift-keying systems"
- IEEE TRANSACTIONS ON COMMUNICATION TECHNOLOGY, vol. COM-14, no. 5, October 1966, pages 564-568; V.I. JOHANNES et al.: "Multiplexing of asynchronous digital signals using pulse stuffing with added-bit signaling"
- IEEE TRANSACTIONS ON INFORMATION THEORY, vol. IT-28, no. 1, January 1982, pages 55-67; G. UNGERBOECK: "Channel coding with multilevel/phase signals"
- IEEE INTERNATIONAL CONFERENCE ON COMMUNICATIONS, Boston, MA, 19th - 22nd June 1983, vol. 3, pages 1472-1477; T. NOGUCHI et al.: "6GHz 135MBPS digital radiosystem with 64 QAM modulation"

## Description

This invention relates to a method of communicating selected information, and particularly stuffing indications, in a multi-level communications system.

In order to provide a high rate at which information can be transmitted via a transmission channel of limited bandwidth, it is known to use multi-level modulation schemes and hence communications systems. In such systems each transmitted information symbol can have one of more than two discrete states, and hence can represent more than one binary digit, whereby the transmitted information rate is greater than the transmitted symbol rate. With an increased number of discrete states or levels the resultant information transmission rate for a given symbol rate is also increased, but it becomes more difficult to distinguish between the different levels at a receiver of the system and the sensitivity of the system to errors, for example due to noise, is also increased.

An example of a multi-level communications system is a QAM (quadrature amplitude modulation) microwave radio transmission system, in which two carrier signal components in phase quadrature are each amplitude modulated. For example, in a 64 QAM system each carrier signal component is amplitude modulated with one of eight discrete amplitude levels, whereby each transmitted symbol can have any one of 64 distinct phase and amplitude states, and can represent 6 bits (2⁶=64).

The information which is required to be transmitted via such a transmission system typically comprises at least one high-speed data bit stream which may include stuffed bits for synchronization purposes. As is well-known, such bit streams must also provide an indication of the presence or absence of stuffing in any particular time division multiplex frame, and hence it is known to provide stuffing indication bits in the multiplexed bit stream for this purpose.

It is essential that the stuffing indication bits be reliably transmitted and received, as a failure to do this can result in not only corrupted information but also lost frame synchronization. Accordingly, it is normal to transmit the stuffing indication bit in each frame, representing the presence or absence of stuffed information in that frame, repeatedly within the frame. Generally the stuffing indication bit may be transmitted three times in different, well-separated, bit positions in the frame, with a majority decision being made from these bits at the receiver to interpret the stuffing indication. Thus corruption of only one of the three bits, for example due to a noise spike during transmission, has no adverse effect.

In practice, it has been found that the reliability with which the stuffing indications are transmitted is a predominant factor in determining the reliability of a radio transmission system overall. Thus increased reliability of the system can only be achieved if the reliability of transmitting stuffing indications is increased.

For greater reliability, therefore, it is known to transmit the stuffing indication bit a greater number of times during the frame, for example five times rather than three times, with a majority decision being made whereby any two of these bits can be corrupted without an adverse effect. However, the greater reliability is achieved at the expense of an increased amount of overhead information (stuffing indication bits) which must be transmitted, and this is itself a significant disadvantage.

This disadvantage is exacerbated by the need to provide for the transmission of stuffing indication bits for each of a plurality of independent data streams which may be multiplexed together for transmission but each of which may be stuffed independently of the others. For example, if a transmission system is to be capable of flexibly accommodating up to six independent data streams, and if for reliability five stuff indication bits are needed for each such data stream, this requires the use of a multiplex frame providing a total of 30 fixed overhead information bit positions for stuffing indication bits alone. Such bit positions must be available in the frame even though generally a smaller number of independent data streams may be present on a particular transmission channel.

It is also known, for example from "Channel Coding with Multilevel/Phase Signals" by G. Ungerboeck, IEEE Transactions on Information Theory, Vol. IT-28, pages 55-67, January 1982, to improve error performance in a communications system by using channel coding techniques in which binary code sequences are mapped by set partitioning into expanded sets of multilevel/phase signals. Typically using such coding the number of signal points in the expanded set or signal point constellation is doubled, e.g. 2⁷=128 signal points would be used for transmission of 6 bits per transmitted symbol. Such coding, and the consequent decoding at the receiver, adds an extra level of complexity and costs which may be undesired, and each communications symbol is no longer constituted by a respective signal point in the signal point constellation. Furthermore, such coding techniques are necessarily applied to all of the communicated data, and again stuffing indication bits are communicated with only the same reliability as any other bits in the transmitted information, and must be transmitted repeatedly in each frame to provide greater reliability.

An object of this invention, therefore, is to provide an improved method of communicating overhead information, in particular stuffing indications, in a multi-level communications system.

According to this invention there is provided a method of communicating information in a multi-level data communications system in which each communications symbol is constituted by a respective one of more than two signal points in a predetermined signal point constellation, the signal points having a predetermined minimum separation therebetween, characterized by communicating selected information by the steps of: transmitting a first state of said selected information using any of a first set of one or more signal points in said constellation; and transmitting a second state of said selected information using any of a second set of one or more signal points in said constellation; wherein said first and second sets are selected so that each signal point in the first set is separated from each signal point in the second set by an amount greater than said predetermined minimum separation.

In its simplest form, the signal point constellation could conceivably have three signal points, such as amplitude levels of an amplitude modulated signal, any one of which would normally be used for the communication, e.g. transmission or storage, of information. In this case for the communication of the selected information the middle amplitude level would be unused, and the first and second states of the selected information would be represented by the outer modulation amplitude levels, whereby a greater separation between signal points, and hence a greater signal-to-noise ratio, is achieved for the selected information than for other, normal information.

Usually, however, the signal point constellation will have 2ⁿ signal points, where n is a plural integer and is usually 4 or more, and each of the first and second sets will have 2ⁿ⁻² signal points, whereby half of the signal points are not used when communicating the selected information and enable the enhanced signal-to-noise ratio to be achieved. Typically, the communications system may be an amplitude modulated or a QAM system, such as a microwave radio system, for communicating a stuffed data signal, the selected information comprising stuffing indications for the data signal.

Preferably the separation of each signal point in the first set from each signal point in the second set is at least substantially three times said predetermined minimum signal point separation of the system.

The invention is also applicable to hexagonal-packed (honeycomb) QAM and other signal point constellations, which may have different minimum separations between the signal points of the first and second sets. For example, a doubling of the minimum signal point separation of the system could be sufficient to give a significantly improved performance in particular circumstances.

The invention will be further understood from the following description by way of example of embodiments thereof with reference to the accompanying drawings, in which:
Fig. 1 illustrates a known 16 QAM signal point constellation;
Fig. 2 is a graph illustrating the known relationship between signal-to-noise ratio and error probability in a 16 QAM transmission system;
Fig. 3 is an amplitude level and coding diagram with reference to which the principles of this invention are explained; and
Fig. 4 illustrates a 64 QAM signal point constellation illustrating stuffing indication coding and decoding in accordance with an embodiment of the invention.

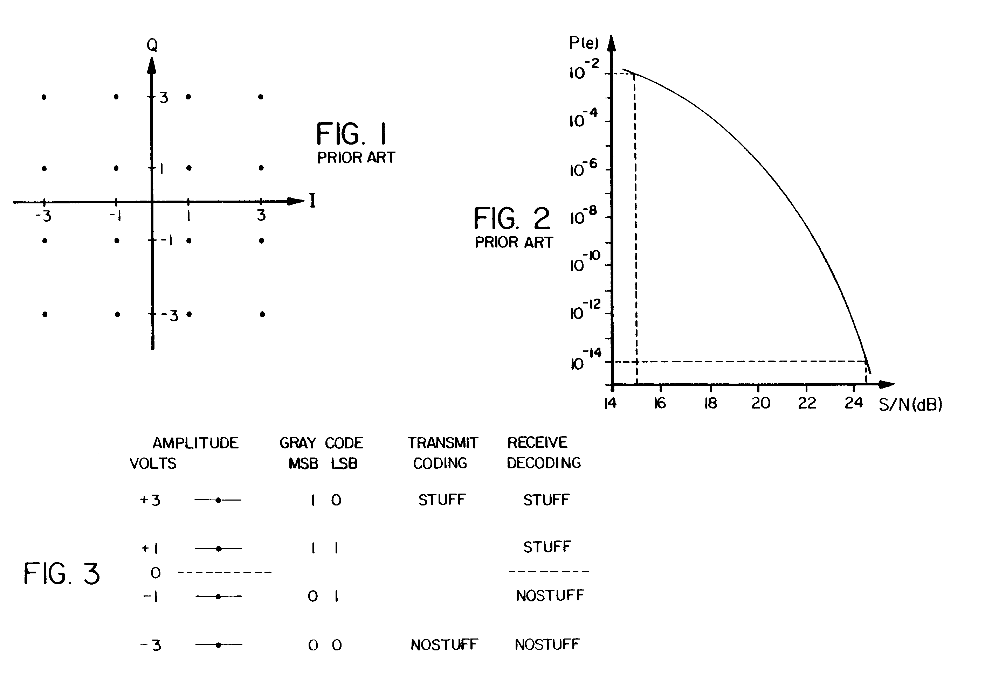

In a conventional manner, Fig. 1 illustrates a signal point constellation for a 16 QAM modulation scheme, in which each one of 16 possible symbols has a respective one of four amplitudes (-3, -1, 1, or 3 volts) for two phase quadrature signal components I and Q. Each symbol in such a modulation scheme can represent four bits (2⁴=16).

In known transmission systems, in order to transmit a stuffing indication bit this bit, together with three other bits of overhead information, are used collectively to provide a respective symbol for transmission. The three other bits are not concerned in any way with the stuffing indication. The state of the stuffing indication bit thus identifies two sets of 8 possible points in the signal point constellation, one of which sets corresponds to a stuff indication and the other of which sets corresponds to a nostuff indication in the relevant multiplex frame. The particular symbol which is transmitted may, as far as the stuffing indication is concerned, be constituted by any of the respective 8 possible signal points.

For example, the 8 possible signal points corresponding to a stuff indication may be selected to be those with a positive amplitude I, with a negative amplitude I corresponding to a nostuff indication. Assuming this situation as an example, then on decoding the stuffing indication at a receiver a positive signal component I will be taken to represent a stuffed frame and a negative signal component I will be taken to represent a nostuff condition, i.e. that the frame contains no stuffed information.

In practice, at the receiver the signal points are displaced from their ideal positions shown in Fig. 1, due to transmission characteristics and noise. It can be seen that a displacement of a signal point with an amplitude of -1 volt for the I signal component through at least +1 volt will result in it being misinterpreted at the receiver as having a positive I signal component. If this signal point represented a nostuff indication, then a stuff indication will be erroneously detected. The probability of an incorrect stuffing bit interpretation is, in such a situation, the same as the probability of any bit error in the transmission system. This probability P(e) can be quite high, for example of the order of 10⁻² or 10⁻³, in typical microwave radio transmission systems in worst-case situations.

As clearly described, in the prior art the reliability of transmitting the stuffing indication bit is increased by transmitting it repeatedly in each frame, so that at the receiver a majority decision of 2 out of 3, or 3 out of 5, bits can be made for the stuffing indication. For a bit error probability P(e) of 10⁻³, the probability of a stuffing indication error then becomes (10⁻³)²=10⁻⁶ in the former case, or (10⁻³)³=10⁻⁹ in the latter case. The latter error probability is desirable, but is only achieved by the use of a five-fold increase in the rate of transmitted stuffing indications.

The invention can achieve a similar or greater improvement in error probability with only a doubling of the rate of transmitted stuffing indications.

Fig. 2 illustrates the known relationship between error probability P(e) and signal-to-noise ratio S/N in a 16 QAM transmission system. The invention makes use of this characteristic, and in particular the dramatic improvement in error probability with small improvements in signal-to-noise ratio, to improve the error probability for transmitted stuffing indications. This is explained below with reference to Fig. 3, which for simplicity relates only to two bits in an amplitude modulation scheme.

Referring to Fig. 3, the two bits referred to, in Gray code order, and corresponding amplitude levels of +3, +1, -1, and -3 volts are illustrated. It is important to note that these two bits are bits of the same symbol, and not of different symbols as in the case of the repeated stuffing indication bits in the prior art. Fig. 3 also illustrates the coding and decoding of these two bits for stuffing indication purposes. As illustrated in Fig. 3, a stuff indication is represented by the bit combination 10 corresponding to an amplitude of +3 volts, and a nostuff indication is represented by the bit combination 00 corresponding to an amplitude of -3 volts. Thus the LSB (least significant bit) is 0 in either case and is effectively unused in transmitting the stuffing indication. The other two possible bit combinations, each with an LSB of 1, are not transmitted.

At the receiver, detection of either of the bit combinations 10 and 11 is interpreted as a stuff indication, and detection of either of the bit combinations 01 and 00 is interpreted as a nostuff indication. Thus although the bit combinations 11 and 01 are not transmitted for stuffing indication purposes, they are interpreted at the receiver.

As a result of this arrangement, it can be seen that a signal point displacement through at least 3 volts (from +3 volts to a negative value, or from -3 volts to a positive value) is necessary before a transmitted stuffing indication is wrongly interpreted at the receiver. Compared with the 1 volt signal point displacement discussed above, this represents a signal-to-noise ratio improvement of 20log(3/1)=9.5dB for the transmission of stuffing indications. Referring to Fig. 2, it can be seen that even if the error probability P(e) for a 1 volt noise spike is about 10⁻², such a 9.5dB improvement in signal-to-noise ratio results in an error probability of the order of 10⁻¹⁴.

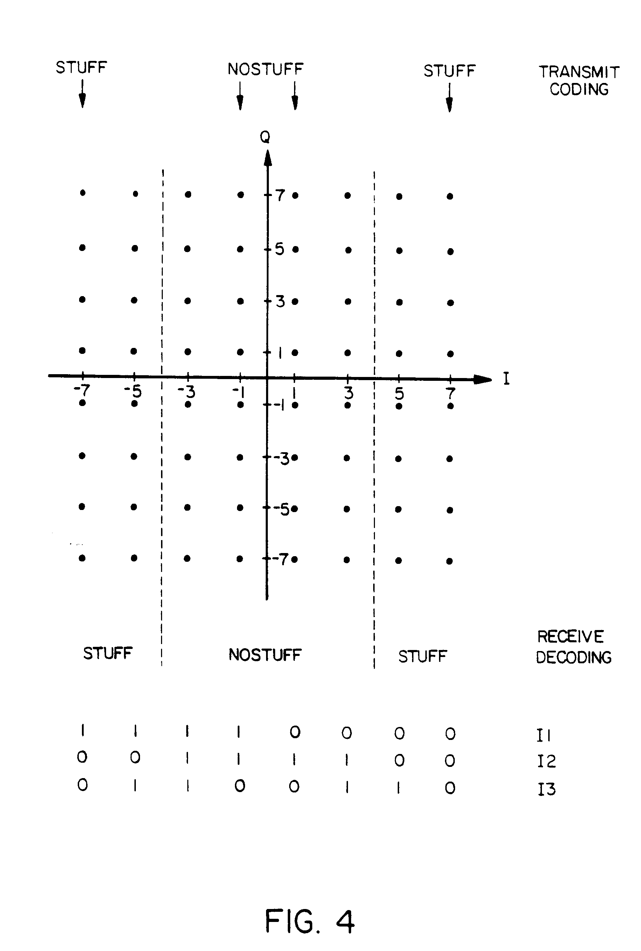

Fig. 4 illustrates an embodiment of the invention applied to a 64 QAM modulation scheme, in which there are 64 signal points in the constellation any particular one of which is selected by three Q bits (not represented) for the amplitude of the Q signal component and three I bits I1, I2, and I3 for the I signal component. In this case the two least significant I bits, I2 and I3, are used for the stuffing indication communication, and the most significant I bit, I3, and the three Q bits in the same symbol are used for other purposes. At the transmitter, a stuff indication is represented by the bits I2=0 and I3=0, and a nostuff indication is represented by the bits I2=1 and I3=0. These indications correspond to I signal amplitudes of ±7 volts and ±1 volts respectively, to achieve an optimum signal-to-noise ratio for the stuffing indication communication. At the receiver, a stuff indication is determined from the bit I2=0, and a nostuff indication is determined from the bit I2=1, regardless of the state of the bit I3.

From the above description, it can be seen that the invention resides in the use of a plurality of bit positions redundantly in the same transmitted symbol to transmit the stuffing indication, the bit positions being selected so that there is a greater separation between the states representing a stuff indication and the states representing a nostuff indication, and hence a greater signal-to-noise ratio, than there is for ordinary signal transmission in the system. In this manner, the probability of an error in the detected stuffing indication is greatly decreased in accordance with the characteristic of Fig. 2.

Although the invention has been described in relation to a QAM modulation scheme, it is equally applicable to any other form of multiple level modulation scheme. As the invention relies upon the use of redundancy of bit positions within a single transmitted symbol it is not, however, applicable to binary systems in which each symbol has only two possible states, i.e. the symbol rate is the same as the bit rate.

Furthermore, although as described above two adjacent I bits are used for the stuffing indication, this need not be the case. More than two bits may be used if desired to achieve an even greater signal-to-noise ratio for the stuffing indications, and other combinations of I and/or Q bits may be used to represent the stuff and nostuff situations. What is important for effective operation is not the particular bits which are used, but that in the resulting signal point constellation each signal point which can represent a stuff indication is separated from each signal point which can represent a nostuff indication by an amount which is greater than the normal separation of signal points within the constellation, whereby the signal-to-noise ratio of stuffing indications is greater than that of the system as a whole.

In addition, although the above description relates specifically to the transmission of stuffing indications, it should be appreciated that the invention may be used in a similar manner for the transmission of any selected information with a higher than normal reliability.

Accordingly, numerous modifications, variations, and adaptations may be made to the described embodiments without departing from the scope of the invention as defined in the claims.

## Claims

1. A method of communicating information in a multi-level data communications system in which each communications symbol is constituted by a respective one of more than two signal points in a predetermined signal point constellation, the signal points having a predetermined minimum separation therebetween, characterized by communicating selected information by the steps of:
transmitting a first state of said selected information using any of a first set of one or more signal points in said constellation; and
transmitting a second state of said selected information using any of a second set of one or more signal points in said constellation;
wherein said first and second sets are selected so that each signal point in the first set is separated from each signal point in the second set by an amount greater than said predetermined minimum separation.

2. A method as claimed in claim 1 wherein the separation of each signal point in the first set from each signal point in the second set is at least substantially three times said predetermined minimum signal point separation.

3. A method as claimed in claim 1 or 2 wherein the predetermined signal point constellation has 2ⁿ signal points, where n is a plural integer.

4. A method as claimed in claim 3 wherein each of said first and second sets has 2ⁿ⁻² signal points.

5. A method as claimed in claim 3 or 4 wherein n is equal to or greater than 4.

6. A method as claimed in any of claims 1 to 5 wherein the selected information comprises stuffing indications for a stuffed data signal communicated via the communications system.

7. A method as claimed in any of claims 1 to 6 wherein the communications system is an amplitude modulated system and the signal points comprise different amplitude levels.

8. A method as claimed in any of claims 1 to 6 wherein the communications system is a quadrature amplitude modulated system and the signal points comprise different phase and amplitude states.

## Patentansprüche

1. Verfahren zur Übertragung von Informationen in einem Mehrpegel-Datenübertragungssystem, bei dem jedes Übertragungssymbol durch einen jeweiligen von mehr als zwei Signalpunkten in einer vorgegebenen Signalpunktkonstellation gebildet ist, wobei die Signalpunkte eine vorgegebene minimale Trennung zwischen sich aufweisen,
dadurch gekennzeichnet, daß ausgewählte Informationen durch die folgenden Schritte übertragen werden:
Übertragen eines ersten Zustandes der ausgewählten Information unter Verwendung irgendeines eines ersten Satzes von einem oder mehreren Signalpunkten in der Konstellation, und
Übertragen eines zweiten Zustandes der ausgewählten Information unter Verwendung irgendeines eine zweiten Satzes von einem oder mehreren Signalpunkten in der Konstellation,
wobei die ersten und zweiten Sätze so ausgewählt sind, daß jeder Signalpunkt in dem ersten Satz von jedem Signalpunkt in dem zweiten Satz um einen Betrag getrennt ist, der größer als die vorgegebene minimale Trennung ist.

2. Verfahren nach Anspruch 1, bei dem die Trennung jedes Signalpunktes in dem ersten Satz von jedem Signalpunkt in dem zweiten Satz zumindestens im wesentlichen gleich dem dreifachen der vorgegebenen minimalen Signalpunkttrennung ist.

3. Verfahren nach Anspruch 1 oder 2, bei dem die vorgegebene Signalpunktkonstellation 2ⁿ Signalpunkte aufweist, wobei n eine mehrzahlige ganze Zahl ist.

4. Verfahren nach Anspruch 3, bei dem jeder der ersten und zweiten Sätze 2ⁿ⁻² Signalpukte aufweist.

5. Verfahren nach Anspruch 3 oder 4, bei dem n gleich oder größer als 4 ist.

6. Verfahren nach einem der Ansprüche 1 bis 5, bei dem die ausgewählte Information Stopf-Anzeigen für ein gestopftes Datensignal umfaßt, das über das Übertragungssystem übertragen wird.

7. Verfahren nach einem der Ansprüche 1 bis 6, bei dem das Übertragungssystem ein amplitudenmoduliertes System ist und die Signalpunkte unterschiedliche Amplitudenpegel umfassen.

8. Verfahren nach einem der Ansprüche 1 bis 6, bei dem das Übertragungssystem ein quadraturamplitudenmoduliertes System ist und die Signalpunkte unterschiedliche Phasen- und Amplitudenzustände umfassen.

## Revendications

1. Procédé de communications d'informations dans un système de communications de données à plusieurs niveaux dans lequel chaque symbole de communication est constitué par un point respectif de signalisation parmi plus de deux points de signalisation dans une constellation prédéterminée de points de signalisation, les points de signalisation ayant une distance minimale prédéterminée de séparation, caractérisé par la communication d'une information sélectionnée par les étapes suivantes :
la transmission d'un premier état des informations sélectionnées à l'aide d'un point quelconque d'un premier ensemble d'un ou plusieurs points de signalisation de la constellation, et
la transmission d'un second état des informations sélectionnées à l'aide d'un point quelconque d'un second ensemble d'un ou plusieurs points de signalisation de la constellation,
le premier et le second ensemble étant sélectionnés afin que chaque point de signalisation du premier ensemble soit séparé de chaque point de signalisation du second ensemble d'une quantité supérieure à la distance minimale prédéterminée de séparation.

2. Procédé selon la revendication 1, dans lequel la distance de séparation de chaque point de signalisation du premier ensemble de chaque point de signalisation du second ensemble est au moins égale à trois fois environ la distance minimale prédéterminée de séparation des points de signalisation.

3. Procédé selon la revendication 1 ou 2, dans lequel la constellation prédéterminée de points de signalisation comporte 2ⁿ points de signalisation, n étant un nombre entier.

4. Procédé selon la revendication 3, dans lequel chacun des premier et second ensembles comporte 2ⁿ⁻² points de signalisation.

5. Procédé selon la revendication 3 ou 4, dans lequel n est égal ou supérieur à 4.

6. Procédé selon l'une quelconque des revendications 1 à 5, dans lequel les informations sélectionnées comprennent des informations de bourrage d'un signal de données ayant des bits de bourrage, communiquées par le système de communications.

7. Procédé selon l'une quelconque des revendications 1 à 6, dans lequel le système de communications est un système modulé en amplitude, et les points de signalisation comprennent différents niveaux d'amplitude.

8. Procédé selon l'une quelconque des revendications 1 à 6, dans lequel le système de communications est un système modulé en amplitude en quadrature et les points de signalisation comprennent des états de phase et d'amplitude différentes.
